# EUROPÄISCHE PATENTSCHRIFT

(11) **EP 3 762 514 B1**
(45) Veröffentlichungstag und Bekanntmachung des Hinweises auf die Patenterteilung: **14.08.2024**
(21) Anmeldenummer: 19709450.1
(22) Anmeldetag: 05.03.2019
(51) Int. Cl.: F27B 3/08, C21C 5/52, F27B 3/22, C21C 5/28, C21C 5/32

(54) **SCHMELZAGGREGAT ZUR STAHLERZEUGUNG**
SMELTING ASSEMBLY FOR THE PRODUCTION OF STEEL
UNITÉ DE FUSION POUR LA PRODUCTION D'ACIER

(30) Priorität: 06.03.2018 DE 102018203279
(43) Veröffentlichungstag der Anmeldung: 13.01.2021
(73) Patentinhaber: SMS group GmbH, 40237 Düsseldorf (DE)
(72) Erfinder: STARKE, Peter, 47228 Duisburg (DE); SCHÜRING, Andreas, 45475 Mülheim (DE); HENKEL, Thomas, 47057 Duisburg (DE); ODENTHAL, Hans-Jürgen, 40822 Mettmann (DE)
(74) Vertreter: Kross, Ulrich
(86) Internationale Anmeldenummer: PCT/EP2019/055408
(87) Internationale Veröffentlichungsnummer: WO 2019/170650

(56) Entgegenhaltungen:
- EP-A1- 0 717 115
- DE-A1- 10 115 779
- LEMKE S ET AL: "TAILORED SOLUTIONS FOR THE PRODUCTION OF QUALITY STEEL", MPT. METALLURGICAL PLANT AND PLANT AND TECHNOLOGY INTERNATI, VERLAG STAHLEISEN, DUESSELDORF, DE, vol. 24, no. 4, 1 August 2001 (2001-08-01), pages 72, XP009010639, ISSN: 0935-7254

## Beschreibung

Die Erfindung betrifft ein verbessertes Schmelzaggregat zur Stahlerzeugung mit einem Herdteil, einem ringförmigen, wassergekühlten, feuerfest ausgekleideten zylindrischen Oberofen, auf den ein nach oben abschließender konischer Hut, mit Öffnungen zur Abgasführung, aufsetzbar ist.

Stahlhersteller, die Hochofen-BOF-Konverterrouten verwenden, sehen sich immer strengeren Anforderungen an eine emissionsarme Produktion von Stahl gegenüber. Durch aufwendige Abgasreinigungen und sorgfältige Auswahl primärer Einsatzstoffe ist versucht worden auf die gestiegenen Umweltanforderungen zu reagieren. Des Weiteren werden aber auch immer weniger primäre Einsatzstoffe nachgefragt, so dass die spezialisierten Konverterrouten teilweise nicht ausgelastet sind, was sich wiederum negativ auf die Herstellungskosten auswirkt.

Schrott ist ein Kreislaufmaterial, das sich immer wieder zur Herstellung von Stahl nutzen lässt. Die Preise für Schrott sind starken Schwankungen unterworfen. Dabei ist neben chemischer Reinheit und Aufbereitungsgrad auch die lokale Verfügbarkeit für den jeweiligen Preis entscheidend.

Die Herstellung von Stahl (Blasstahl und Elektrostahl) ist verantwortlich für 7 % der anthropogenen Luftverschmutzung weltweit. Wird die Erzgewinnung und der Erztransport mitgezählt, kann man von 10 % ausgesehen.

Die Preise für Zertifikate für CO₂-Emissionen verteuern sich in den Industrieländern ständig. Aber auch in den Schwellenländern und Entwicklungsländern verschärfen sich die Auflagen für Emissionen drastisch. Die Stahlhersteller sind aufgefordert, ihre CO₂-Emissionen drastisch zu senken.

Mittelfristig ist es notwendig, sowohl die Erzgewinnung als auch die Verhüttung von Eisenerz zu verringern. Die Stahlherstellung sollte in Zukunft mehrheitlich über Recycling (EAF) erfolgen. Im Verhältnis zum BOF sind die Emissionen beim EAF etwa 75 % geringer.

Langfristig wird der Abbau von Eisenerz und die Herstellung von Roheisen verringert werden und der Anteil an Recycling an der Stahlherstellung wird steigen. Zusätzlich steht der Austausch von Kohlenstoffträgern gegen weniger umweltschädliche Reduktionsmittel auf der Agenda der Eisenerzeuger.

Aus der WO 2017/000935 A1 ist ein Umbausystem für einen EAF-Ofen bekannt, um aus diesem einen BOF-Konverter zu machen. Diese Umbausysteme haben sich zwar bewährt, sind aber mit dem Nachteil behaftet, dass sie dann auf flüssige Einsatzstoffe beschränkt sind, da ein derartig umgebauter Ofen als Konverter betrieben wird und eine Umrüstung kosten- und zeitintensiv ist.

Aus der EP 0717115 A ist ein System bekannt, in dem jeweils ein Ofengefäss mit entweder mit einer TOP-Sauerstofflanze oder mit Elektroden gefahren wird.

Aufgabe der vorliegenden Erfindung ist es ein Schmelzaggregat zur Verfügung zu stellen, dass die flexible Verarbeitung unterschiedlichster Einsatzstoffe auch im festen und/oder flüssigen Aggregatzustand ermöglicht, und die Tap-to-Tap Zeiten unter Berücksichtigung unterschiedlicher Stahlqualitäten unter Verwendung unterschiedlicher Einsatzstoffe bei zeitgleicher CO₂ - Reduzierung, verringert.

Diese Aufgabe wird durch die in Anspruch 1 angegebenen Merkmale gelöst, insbesondere dadurch, dass das Schmelzaggregat sowohl für die Fahrweise ohne Schmelzstrom (d.h. elektrischem Energieeintrag) als auch für die Fahrweise mit Schmelzstrom ausgelegt ist und durch den Wechsel des Ofendeckels die Fahrweise des Schmelzaggregats änderbar ist, wobei der konische Ofendeckel für die Fahrweise ohne Schmelzstrom mindestens eine Öffnung aufweist, durch die mindestens eine Toplanze zur Einblasung eines Prozessgases in den Oberofen einführbar ist und der konische Ofendeckel für die Fahrweise mit Schmelzstrom mindestens eine Öffnung aufweist, durch die mindestens eine Graphit-Elektrode in den Oberofen einführbar ist und in dem zylindrischen Oberofen radial umlaufend eine Vielzahl von Seitenwandinjektoren derart angeordnet sind, dass die Toplanze und die Seitenwandinjektoren in Arbeitsposition auf einen Schmelzspiegel einer sich im Herdteil zum Frischen befindlichen Schmelze ausrichtbar sind.

Das erfindungsgemäße Schmelzaggregat ermöglicht es den umweltschädlichen Prozess mit heißem Metall als Einsatzstoff für eine gewisse Zeit zu unterbrechen, stufenweise auf Null zu reduzieren und schließlich die Hochofenstilllegung mit der gleichen Schmelzanlage zu ermöglichen. Hohe Anforderungen an die Stahlqualität und Stahlreinheit können durch die Verwendung von Schrott und festem Ausgangsmaterial anstelle von Roheisen gestellt werden. Im erfindungsgemäßen Schmelzaggregat werden bewährte Technologien des BOF-Konverters und des Elektrolichtbogenofens miteinander kombiniert, um die effizientesten und flexibelsten Einsatzmöglichkeiten unterschiedlicher Energieformen zu nutzen. Gleichzeitig ermöglicht das erfindungsgemäße Schmelzaggregat eine flexible Materialvariation mit geringer Rüstzeit für die Ofenanlage.

Gemäß einer vorteilhaften Ausführungsform des erfindungsgemäßen Schmelzaggregats können zur Unterdrückung von starken Schmelzen-Schlacken-Spritzern und damit zur Vermeidung von Verbärungen am Schmelzaggregat und insbesondere des Oberofens, die Toplanze und die Seitenwandinjektoren zeitgleich und mit aufeinander abgestimmten Volumenströmen koordiniert betrieben werden.

Für die Fahrweise mit Schmelzstrom, bei der verschiedene Mischungen von metallischen Einsatzstoffen im Schmelzaggregat vorliegen, kann der Ofendeckel ausgetauscht werden, so dass mindestens eine Graphit-Elektrode in den Herdteil des Schmelzaggregats eingeführt werden kann.

In einer besonderen Ausführungsform des erfindungsgemäßen Schmelzaggregats können durch die Öffnungen des Ofendeckels des Schmelzaggregats für die Fahrweise mit Schmelzstrom mindestens eine Graphit-Elektrode und maximal drei Graphit-Elektroden eingeführt werden.

Des Weiteren ist es vorgesehen, dass bei einem optimalem Einsatz von Seitenwandinjektoren und Toplanze durch die Seitenwandinjektoren zwischen 10% und 50% und durch die Toplanze 90 % bis 50 % des zum Frischen notwendigen Gases gleichzeitig und aufeinander abgestimmt in die sich in dem Schmelzaggregat befindlichen Schmelze eingeblasen werden kann. Durch das optimale Mischungsverhältnis zwischen Toplanze und Seitenwandinjektoren können Schmelzen- und Schlackenspritzern derart reduziert werden, was wiederum einer Verbärung des Gefäßes vorgebeugt.

Hierbei lassen sich die metallischen Einsatzstoffe für die Erzeugung von Kohlenstoff - Stahl in dem erfindungsgemäßen Schmelzaggregat in die folgende Gruppen einteilen:
I. flüssiges Roheisen (auch als Pig Iron oder Hot Metal bezeichnet) festes Roheisen in Form von Roheisenmasseln oder granuliertem RE (GPI)
II. Eisenschwamm (DRI (direct reduced iron)) kalt oder heiß chargiert
III. HBI (hot bricketted iron), CBI (cold bricketted iron)
IV. Schrotte hochaufbereitet (Schredder, Doppelhäcksel, Pakete)
V. Schrotte mit geringem Aufbereitungsgrad (HMS 1, HMS 2) kontaminierte
VI. Schrotte (Schrott aus Müllverbrennungsanlagen, Späne)
VII. Sondermaterialien, die im Stahlherstellungsprozess als Eisenträger oder Kühlmittel Verwendung finden (Synthicon, Eisenkarbid)

Die Gruppen I - IV repräsentieren sogenannte jungfräuliche Einsatzstoffe, die keine unerwünschten Stahlbegleiter (z.B. Cu, Cr und Ni) enthalten. Für eine Reihe von Stählen ist es notwendig, einen gewissen Anteil dieser jungfräulichen Einsatzstoffe einzusetzen, um die Qualität des Endproduktes zu sichern. Die Herstellung dieser Einsatzstoffe ist sehr energieaufwendig und belastet die Umwelt damit stark.

Die Gruppen V - VII repräsentieren Kohlenstoff - Stahlschrotte unterschiedlicher Qualität und unterschiedlichen Aufbereitungsgrades. Schrotte sind Recyclingmaterialien. Höherer Aufbereitungsgrad und geringere chemische Verunreinigungen führen zu höheren Preisen für diese Schrotte.

Die Gruppe VIII repräsentiert alle Sondermaterialien, die als Einsatzstoffe für die Stahlherstellung genutzt werden.

In Abhängigkeit vom Herstellungs- oder Aufbereitungsverfahren unterscheiden sich die Preise für die metallischen Einsatzstoffe erheblich.

Bei den Einsatzstoffen der Gruppen I und II sind die Preise für Eisenerz (-pellets) und Koks maßgeblich für die Kosten der Roheisenherstellung. Der Markt für Eisenerz wird von wenigen Produzenten beherrscht. Hüttenwerke, die nicht über eigene Minen verfügen, sind den Preisdiktaten des Marktes ausgeliefert.

Bei den Einsatzstoffen der Gruppen III und IV sind die Anforderungen an die Qualität des Eisenerzes (meist Erzpellets) noch höher als für den Hochofenprozess. Die Verfügbarkeit solcher Pellets ist begrenzt. Das wirkt sich auf den Preis der Pellets aus. Für die trockene Reduktion des Erzes wird ein Reduktionsgas genutzt. Die Verfügbarkeit entscheidet letztendlich über den lokalen Preis. DRI enthält 5 - 10 % Gangart, einen Anteil FeO und liegt im Kohlenstoffgehalt (Energie!) niedriger als Roheisen. Für das Erschmelzen dieser Einsatzstoffe benötigt man mehr Energie als für das Schmelzen von Roheisen. Die hier aufgeführten Einsatzstoffe sind im Vergleich zur Gruppe I und II weniger teuer.

Mit dem erfindungsgemäßen Schmelzaggregat sind alle Einsatzstoffe flexibel einsetzbar, da es ähnlich wie ein BOF betrieben werden kann. Dabei kann der Anteil an Schrott (Kühlschrott) oder eines anderen Kühlmittels auf etwa 15 % abgesenkt werden. Sauerstoff wird mittels Seitenwandlanzen und einer Toplanze eingebracht. Die Problematik der Verbärung des Ofengefäßes bei Nutzung normaler EAF's im alleinigen Injektorbetrieb, d. h. ohne elektrischen Energieeintrag, wird beim erfindungsgemäßen Schmelzaggregat durch eine veränderte Ofengeometrie und die Kombination von Seitenwandinjektoren und Toplanze vermieden.

Stehen während des Betriebes des Schmelzaggregats zeitweise oder dauerhaft keine ausreichend großen Mengen an Flüssigroheisen zur Verfügung oder wird die Produktion von Flüssigroheisen eingestellt, kann das Schmelzaggregat wie ein normaler EAF betrieben werden. Der Umbau auf EAF - Fahrweise ist unkompliziert und kann zwischen zwei Kampagnen erfolgen.

In der Konsequenz daraus kann das Schmelzaggregat für die Fahrweise ohne Schmelzstrom, d. h. ohne elektrischen Energieeintrag, und die Fahrweise mit Schmelzstrom anders ausgelegt werden.

Bei einem Betrieb des erfindungsgemäßen Schmelzaggregats ohne Einsatz von Schmelzstrom ist der Ablauf wie folgt:
a. Abstich verfüllen. Ofen kontrollieren.
b. Ofen gerade stellen, Deckel öffnen, Portalverriegelung ausfahren, Portal ausschwenken, Schrott chargieren, Portal einschwenken, Portal verriegeln, Deckel absenken, Kippbühne verriegeln (als Sequenz)
c. Chargieren von Flüssigroheisen starten
d. Sauerstoff - Toplanze einschwenken, absenken und zünden
e. Seitenwandinjektoren nacheinander zuschalten
f. wenn das gesamte Roheisen chargiert ist, Charge fertig blasen
g. Temperaturkontrolle
h. Toplanze anheben, Ofen entriegeln
i. Abstich

Wird das erfindungsgemäße Schmelzaggregat nur anteilig mit flüssigem Roheisen gefahren, ist der Ablauf wie folgt:
a. Abstich verfüllen. Ofen kontrollieren.
b. Ofen gerade stellen, Deckel öffnen, Portalverriegelung ausfahren, Portal ausschwenken, Schrott/ Eisenträger chargieren, Portal einschwenken, Portal verriegeln, Deckel absenken, Kippbühne verriegeln. Elektroden - Tragwerk einschwenken, absenken und zünden (als Sequenz)
c. Seitenwandinjektoren als Brenner zuschalten
d. Chargieren von Flüssigroheisen starten
e. Injektoren Umschalten von Brenner auf Lanzenbetrieb
f. wenn das gesamte Roheisen chargiert ist, Charge fertig machen
g. Temperaturkontrolle
h. Elektroden anheben, Ofen entriegeln
i. Abstich

Wird kein flüssiges Roheisen chargiert, entfallen d. und f. Bei Zweikorbchargen werden die Punkte b., c. und f. wiederholt.

Hiermit wird deutlich, dass das erfindungsgemäße Schmelzaggregat universell einsetzbar ist. Wenn es ohne Schmelzstrom zur Erzeugung von Stahl genutzt wird, vereint es viele Vorteile des BOF mit denen eines EAF. Obwohl die Blasrate geringer ist als beim BOF, kann eine sehr hohe Produktivität erreicht werden, da die Nutzungsnebenzeiten bei dem erfindungsgemä-ßen Schmelzaggregat geringer sind als beim BOF.

Zusätzlich kann bei Einsatz von Flüssigroheisen mit hohem P - Gehalt eine sehr gute Entphosphorung erreicht werden. Die phosphorhaltige Schlacke kann - anders als beim BOF - kontinuierlich ablaufen.

Durch den gleichzeitigen Betrieb von Toplanze und Seitenwandinjektoren (balanced blowing) kommt es zu einer Unterdrückung von starkem Spritzen und damit zur Vermeidung von Verbärungen des Gefäßes. Dies wird durch das Design des Deckelbereiches unterstützt, so dass auch eine Verbärung des Krümmerbereiches vermieden wird. Durch die Seitenwandinjektoren sollen zwischen 10 % und 50 % und durch die Toplanze 90 % bis 50 % des zum Frischen notwendigen Gases (Sauerstoff oder geeignete Substituenten) in die sich in dem Schmelzaggregat befindliche Schmelze eingeblasen werden.

Wird das erfindungsgemäße Schmelzaggregat mit Schmelzstrom betrieben (also mit verschiedenen Mischungen von metallischen Einsatzstoffen), wird das Gefäß mit einem Deckel gewechselt und der Ofen kann jetzt mit Elektroden betrieben werden. Der Ofen hat durch die Seitenwandinjektoren weiterhin eine hohe Effektivität.

Steht kein Roheisen mehr zur Verfügung, wird durch entsprechenden Einsatz von elektrischer Energie eine hohe Produktivität gesichert. Für die Erzeugung von hochqualitativen Stählen muss dann - anders als beim BOF - nur noch der Anteil an jungfräulichem Einsatzmaterial gesetzt werden, der notwendig ist. Damit kann der Einsatz dieser Eisenträger, bei deren Herstellung die Umwelt erheblich belastet wird, verringert werden.

Im Folgenden wird die vorliegende Erfindung anhand einer beispielhaften Ausführungsform näher erläutert. Sie zeigen:
- **Fig. 1**: Die schematische Darstellung des erfindungsgemäßen Schmelzaggregats in teilweise geschnitten, aus der die hybride Bauweise mit BOF- und EAF-Komponenten ersichtlich ist;
- **Fig. 2**: die Darstellung gemäß Fig. 1, mit dem Unterschied, das über wenigstens einen Elektrodentragarm anstelle von Graphit-Elektroden eine Toplanze in das Schmelzaggregat eingeführt ist.

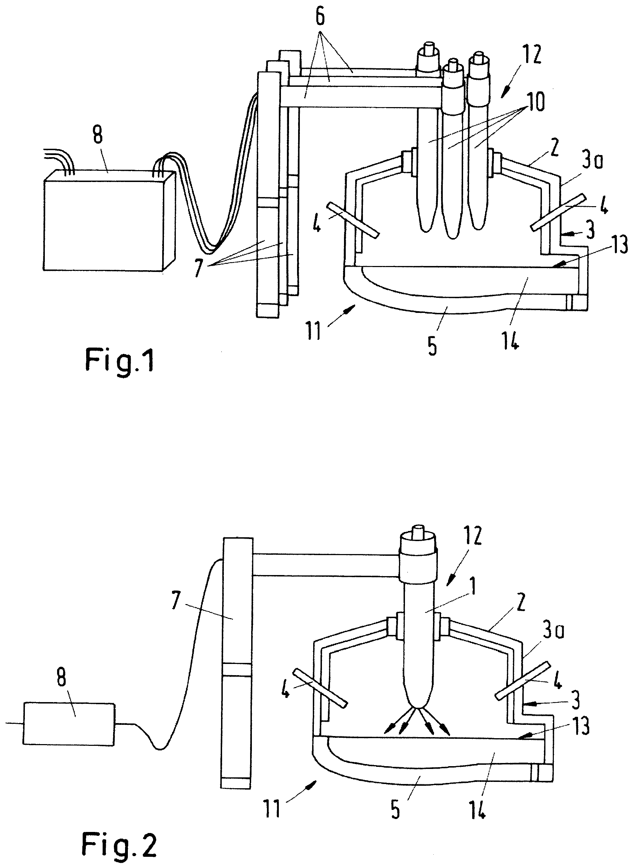

Wie in der Fig. 1 und der Fig. 2 dargestellt, besteht das vorliegende Schmelzaggregat 11 aus einem Untergefäß 5 (Herdteil) und einem Obergefäß 3, die miteinander formschlüssig verbunden sind. Das Untergefäß 5 ist mit Feuerfestmaterial ausgekleidet und dient der Aufnahme einer Schmelze. Dem Obergefäß 3 ist eine Wasserkühlung 3a zugeordnet. Das Obergefäß 3 kann mit einem Hut / Deckel 2 abgedeckt werden. Dem Hut / Deckel 2 ist mindestens eine Öffnung 12 zugeordnet, durch die entweder Schmelzelektroden, insbesondere Graphitelektroden 10 (in dieser Ausführungsform sind es drei Graphitelektroden) oder mindestens eine Toplanze 1 in das Schmelzaggregat 11 eingeführt werden können. Der Hut / Deckel 2 ist, ebenso wie das Obergefäß 3, wassergekühlt.

Die Graphitelektroden 10 und die Toplanze 1 werden dabei über Elektrodentragsäulen 7 und mit diesen verbundenen Elektrodenarmen 6 gesteuert, um diese bedarfsgerecht in das und aus dem Schmelzaggregat 11 verfahren zu können.

Der Oberofen 3 weist eine im Wesentlichen runde / zylindrische Seitenwand 3a auf. Der Seitenwand 3a sind - radial außen umlaufend - Öffnungen zugeordnet. Durch die Öffnungen in der Seitenwand 3a, können Seitenwandinjektoren 4 eingeführt werden, die sodann auf eine im Unterofen 5 zu behandelnden Schmelze 14 ausgerichtet werden können. Die Toplanze 1 und die Seitenwandinjektoren 4 sind dabei in Arbeitsposition auf einen Schmelzspiegel 13 der sich im Untergefäß / Herdteil 5 zum Frischen befindlichen Schmelze 14 ausgerichtet.

Wie in der Fig. 2 dargestellt, kann die Toplanze 1 über eine Ventilstation (Oxygen Valve Station) 8 mit Sauerstoff versorgt werden. Dabei wird die Toplanze 1 von der Oxygen Valve Station 8 gesteuert und gemäß entsprechender Vorgaben gefahren.

Für den Schmelzbetrieb nach der Art eines EAF werden die Graphitelektroden 10 mittels eines Transformators 9 mit entsprechender elektrischer Energie versorgt, wie dies in Figur 1 dargestellt ist.

Es ist vorgesehen, dass die Seitenwandinjektoren 4 (Seitenlanzen) und die Toplanzen 1 (mehr als eine Toplanze kann vorgesehen werden) gemeinsam gefahren werden bzw. ein Gas (in der Regel Sauerstoff) zeitgleich eingeblasen werden kann. In dieser Konfiguration sollen immer Seitenwandinjektoren 4 im Obergefäß 3 (bzw. in der zylindrischen Seitenwand 3a) und eine oder mehrere Toplanzen 1 zusammen gefahren werden. Diese Fahrweise soll in einem optimierten Mischungsverhältnis zwischen 10 % und 50 % über die Seiteninjektoren und 90 % bis 50 % über die Toplanze 1 (bzw. Toplanzen) erfolgen. Durch diese Fahrweise kann in einem kleinen Schmelzaggregat 11 wesentlich mehr Gas (Sauerstoff) pro Zeiteinheit in die Schmelze 14 eingeblasen werden, ohne das es zu erheblich mehr Spritzern kommen würde.

### Bezugszeichen

- 1: Toplanze (Sauerstoff)
- 2: wassergekühlter Ofendeckel / Hut (Haube)
- 3: wassergekühltes Obergefäß / Oberofen
- 3a: Seitenwand Obergefäß
- 4: Seitenwandinjektoren
- 5: Unterofen mit Feuerfestauskleidung (Herdteil)
- 6: Elektrodenarm
- 7: Elektrodentragsäulen
- 8: Ventilstation (Oxygen Valve Station)
- 9: Transformator
- 10: Schmelzelektroden / Graphitelektroden
- 11: Schmelzaggregat
- 12: Deckelöffnung(en)
- 13: Schmelzspiegel
- 14: Schmelze

## Patentansprüche

1. Schmelzaggregat (11) zur Stahlerzeugung mit einem feuerfest ausgekleideten Unterofen / Herdteil (5) mit Bodenabstich, einem im Wesentlichen zylindrischen, wassergekühlten, Oberofen (3), auf dem ein nach oben abschließender konischer Ofendeckel (2), mit einem speziell gestalteten Abgasstutzen, aufsetzbar ist, **gekennzeichnet dadurch, dass** das Schmelzaggregat (11) sowohl für die Fahrweise ohne Schmelzstrom (d.h. ohne elektrischem Energieeintrag) als auch für die Fahrweise mit Schmelzstrom ausgelegt ist und durch den Wechsel des Ofendeckels (2) die Fahrweise des Schmelzaggregats (11) änderbar ist, wobei der konische Ofendeckel (2) für die Fahrweise ohne Schmelzstrom mindestens eine Öffnung (12) aufweist, durch die mindestens eine Toplanze (1) zur Einblasung eines Prozessgases in den Oberofen (3) einführbar ist und der konische Ofendeckel (2) für die Fahrweise mit Schmelzstrom mindestens eine Öffnung (12) aufweist, durch die mindestens eine Graphit-Elektrode (10) in den Oberofen (3) einführbar ist und in dem zylindrischen Oberofen (3) radial umlaufend eine Vielzahl von Seitenwandinjektoren (4) derart angeordnet sind, dass die Toplanze (1) und die Seitenwandinjektoren (4) in Arbeitsposition auf einen Schmelzspiegel (13) einer sich im Unterofen / Herdteil (5) zum Frischen befindlichen Schmelze (14) ausrichtbar sind.

2. Schmelzaggregat zur Stahlerzeugung nach Anspruch 1, **dadurch gekennzeichnet, dass** zur Unterdrückung von starken Schmelzen-Schlacken-Spritzern und damit zur Vermeidung von Verbärungen am Schmelzaggregat (11) und insbesondere des Oberofens (3), die Toplanze (1) und die Seitenwandinjektoren (4) zeitgleich und mit aufeinander abgestimmten Volumenströmen koordiniert betreibbar sind.

3. Schmelzaggregat zur Stahlerzeugung nach Anspruch 1, **dadurch gekennzeichnet, dass** für die Fahrweise mit Schmelzstrom, bei der verschiedene Mischungen von metallischen Einsatzstoffen im Schmelzaggregat (11) vorliegen, der Ofendeckel (2) austauschbar ist, so dass mindestens eine Graphit-Elektrode (10) in den Herdteil (5) einführbar ist.

4. Schmelzaggregat zur Stahlerzeugung nach Anspruch 3, **dadurch gekennzeichnet, dass** durch die Öffnungen (12) des Ofendeckels (2) für die Fahrweise mit Schmelzstrom mindestens eine Graphit-Elektrode (10) einführbar ist und maximal drei Graphit-Elektroden (10) einführbar sind.

5. Schmelzaggregat zur Stahlerzeugung nach Anspruch 1 oder Anspruch 2, **dadurch gekennzeichnet, dass** bei einem optimalem Einsatz von Seitenwandinjektoren (4) und Toplanze (1) durch die Seitenwandinjektoren (4) zwischen 10% und 50% und durch die Toplanze (1) 90 % bis 50 % des zum Frischen notwendigen Gases gleichzeitig und aufeinander abgestimmt in die sich in dem Schmelzaggregat (11) befindlichen Schmelze (14) einblasbar ist.

6. Schmelzaggregat zur Stahlerzeugung nach Anspruch 5, **dadurch gekennzeichnet, dass** durch das optimale Mischungsverhältnis zwischen Toplanze (1) und Seitenwandinjektoren (4) Schmelzen- und Schlackenspritzern reduzierbar sind, und dadurch eine Verbärung des Obergefä-ßes (3) verringerbar ist.

7. Schmelzaggregat zur Stahlerzeugung nach einem oder mehreren der vorgenannten Ansprüche 1 und 6, **dadurch gekennzeichnet, dass** der Ofendeckel (2) einen speziell geformter und geneigt ausgebildeter Ofenkrümmer zugeordnet ist, dessen Querschnitt so an die Prozessbedingungen angepasst ist, so dass eine maximale Strömungsgeschwindigkeit des beim Frischen entstehenden Abgases von 50 m/s nicht überschreitbar ist.

## Claims

1. Smelting unit (11) for steel production with a refractory-clad lower furnace / hearth part (5) with bottom tap, and a substantially cylindrical water-cooled upper furnace (3) on which a conical furnace cover (2), which closes off in upward direction, with a specially formed waste gas stub pipe is placeable, **characterised in that** the smelting unit (11) is designed not only for the mode of operation without smelting current (i.e. without intake of electrical energy), but also for the mode of operation with smelting current and the mode of operation of the smelting unit (11) can be changed by change of the furnace cover (2), wherein the conical furnace cover (2) has for the mode of operation without smelting current at least one opening (12) through which at least one top lance (1) for injection of a process gas into the upper furnace (3) is introducible and the conical furnace cover (2) has for the mode of operation with smelting current at least one opening (12) through which at least one graphite electrode (10) is introducible into the upper furnace (3), and a plurality of side wall injectors (4) is so arranged in the cylindrical upper furnace (3) in radial encirclement that the top lance (1) and the side wall injectors (4) in operating position can be oriented onto a melt surface (13) of a melt, which is present in the lower furnace / hearth part (5), for oxidation.

2. Smelting unit for steel production according to claim 1, **characterised in that** for suppression of strong melt/slag splashes and thus for avoidance of skull formations at the smelting unit (11) and in particular of the upper furnace (3) the top lance (1) and the side wall injectors (4) are operable in co-ordinated manner at the same time and with volume flows matched to one another.

3. Smelting unit for steel production according to claim 1, **characterised in that** for the mode of operation with smelting current, in which different mixtures of metallic charge materials are present in the smelting unit (11), the furnace cover (2) is exchangeable so that at least one graphite electrode (10) can be introduced into the hearth part (5).

4. Smelting unit for steel production according to claim 3, **characterised in that** at least one graphite electrode (10) and at most three graphite electrodes (10) is or are introducible through the openings (12) of the furnace cover (2) for the mode of operation with smelting current.

5. Smelting unit for steel production according to claim 1 or claim 2, **characterised in that**, in optimal use of side wall injectors (4) and top lance (1), through the side wall injectors (4) between 10% and 50% and through the top lance (1) 90% to 50% of the gas necessary for oxidation can be injected simultaneously and matched to one another into the melt (14) present in the smelting unit (1).

6. Smelting unit for steel production according to claim 5, **characterised in that** melt and slag splashes are reducible by the optimal mixture ratio between top lance (1) and side wall injectors (4) and skull formation of the upper vessel can thereby be diminished.

7. Smelting unit for steel production according to one or more of the preceding claims 1 and 6, **characterised in that** a furnace elbow, which is specially shaped and of inclined configuration and the cross-section of which is so matched to the process conditions that a maximum flow speed of 50 m/s of the waste gas arising during oxidation cannot be exceeded, is associated with the furnace cover (2).

## Revendications

1. Installation de fusion (11) pour la production d'acier avec une partie inférieure de four / foyer (5) revêtue de matériaux réfractaires avec un trou de coulée au fond, une partie supérieure de four (3) essentiellement cylindrique, refroidie par eau, sur laquelle un couvercle de four conique (2), se terminant vers le haut et doté d'une buse d'évacuation des gaz spécialement conçue, peut être placé, **caractérisée en ce que** l'installation de fusion (11) est conçue à la fois pour fonctionner sans courant de fusion (c'est-à-dire sans apport d'énergie électrique) et pour fonctionner avec un courant de fusion, et que le mode de fonctionnement de l'installation de fusion (11) peut être modifié par le changement du couvercle de four (2), le couvercle de four conique (2) ayant au moins une ouverture (12) pour l'introduction d'au moins une lance supérieure (1) pour l'injection d'un gaz de processus dans la partie supérieure du four (3) et le couvercle de four conique (2) ayant au moins une ouverture (12) pour l'introduction d'au moins une électrode en graphite (10) dans la partie supérieure du four (3), et dans la partie supérieure du four (3) cylindrique une pluralité d'injecteurs latéraux (4) sont disposés de manière radiale et périphérique de sorte que la lance supérieure (1) et les injecteurs latéraux (4) puissent être alignés en position de travail sur un miroir de fusion (13) d'un métal en fusion (14) se trouvant dans la partie inférieure du four / foyer (5) pour l'affinage.

2. Installation de fusion pour la production d'acier selon la revendication 1, **caractérisée en ce que** pour supprimer les éclaboussures fortes de fusion et de laitier et ainsi éviter les dommages à l'installation de fusion (11) et en particulier à la partie supérieure du four (3), la lance supérieure (1) et les injecteurs latéraux (4) peuvent être actionnés simultanément et avec des débits volumiques coordonnés les uns avec les autres.

3. Installation de fusion pour la production d'acier selon la revendication 1, **caractérisée en ce que** pour le mode de fonctionnement avec courant de fusion, où différents mélanges de matières premières métalliques sont présents dans l'installation de fusion (11), le couvercle de four (2) est interchangeable, de sorte qu'au moins une électrode en graphite (10) peut être introduite dans la partie inférieure du four (5).

4. Installation de fusion pour la production d'acier selon la revendication 3, **caractérisée en ce que** par les ouvertures (12) du couvercle de four (2) pour le mode de fonctionnement avec courant de fusion, au moins une électrode en graphite (10) peut être introduite et jusqu'à trois électrodes en graphite (10) peuvent être introduites.

5. Installation de fusion pour la production d'acier selon la revendication 1 ou 2, **caractérisée en ce que**, avec une utilisation optimale des injecteurs latéraux (4) et de la lance supérieure (1), entre 10 % et 50 % du gaz nécessaire à l'affinage peut être injecté par les injecteurs latéraux (4) et entre 90 % et 50 % par la lance supérieure (1), simultanément et de manière coordonnée, dans le métal en fusion (14) se trouvant dans l'installation de fusion (11).

6. Installation de fusion pour la production d'acier selon la revendication 5, **caractérisée en ce que** le rapport de mélange optimal entre la lance supérieure (1) et les injecteurs latéraux (4) permet de réduire les éclaboussures de fusion et de laitier, et ainsi de diminuer les dommages à la partie supérieure du four (3).

7. Installation de fusion pour la production d'acier selon une ou plusieurs des revendications précédentes 1 à 6, **caractérisée en ce que** le couvercle de four (2) est associé à un coude de four spécialement formé et incliné, dont la section transversale est adaptée aux conditions de processus de manière à ce qu'une vitesse maximale de l'écoulement des gaz d'échappement générés lors de l'affinage de 50 m/s ne puisse être dépassée.
